# EUROPEAN PATENT APPLICATION

(11) **EP 4 757 030 A1**
(43) Date of publication of application: **10.06.2026**
(21) Application number: 24908126.6
(22) Date of filing: 19.12.2024
(51) Int. Cl.: H01M 50/242, H01M 50/211, H01M 50/502, H01M 50/178, H01M 10/04

(54) **COMPRESSION PAD, BATTERY CELL STACK, AND BATTERY MODULE INCLUDING SAME**

(30) Priority: 22.12.2023 KR 20230190432
(71) Applicant: LG Energy Solution, Ltd., Seoul 07335 (KR)
(72) Inventor: LEE, Sung In, Daejeon 34122 (KR); KIM, Chang Ho, Daejeon 34122 (KR); KIM, Hyun Jin, Daejeon 34122 (KR)
(74) Representative: Goddar, Heinz J.
(86) International application number: PCT/KR2024/020736
(87) International publication number: WO 2025/135844

(57) **Abstract**

A battery cell stack according to an embodiment of the present disclosure may include a plurality of battery cells arranged parallel to each other, each battery cell including an electrode assembly having an electrode tab and an outer packaging accommodating the electrode assembly; and a compression pad interposed between the plurality of battery cells. The compression pad may include a main portion; and a side portion disposed at an end portion of the main portion, and having a lower compression ratio than the main portion, the side portion overlapping an electrode tab-side region of the battery cell with respect to a thickness direction of the compression pad.

## Description

### TECHNICAL FIELD

### CROSS-REFERENCE TO RELATED APPLICATIONS

The present application claims priority to Korean Patent Application No. 10-2023-0190432 filed on December 22, 2023 in the Republic of Korea, the disclosure of which is incorporated herein by reference.

### TECHNICAL FIELD

The present disclosure relates to a compression pad interposed between a plurality of battery cells, and a battery cell stack and a battery module including the same.

### BACKGROUND ART

With the technology development and growing demand for mobile devices, the demand for secondary batteries as an energy source is rapidly increasing. In particular, secondary batteries are attracting much attention as an energy source for mobile devices such as mobile phones, digital cameras, laptop computers and wearable devices as well as power devices of electric bicycles, electric vehicles and hybrid electric vehicles.

Small mobile devices use at least one battery cell per device, while medium and large devices such as vehicles require high output and large capacity. Accordingly, medium and large battery modules including a plurality of battery cells electrically connected are used.

It is desirable to make medium and large battery modules as small as possible in size and weight, and thus prismatic batteries or pouch-type batteries that can be stacked closely together and have a small weight per capacity are mainly used as battery cells of medium and large battery modules.

Meanwhile, a battery module may include a module frame accommodating a battery cell stack in an internal space to protect the battery cell stack from external shocks, heat or vibration.

The battery cell stack may include a plurality of battery cells and a compression pad that contacts the battery cells. The compression pad may absorb shocks transmitted to the adjacent battery cells and slow down thermal propagation in the event of fire in any battery cell.

In the case where swelling occurs due to gas generated during charging and discharging of the battery cell, the compression pad applies pressure to the battery cell when it is compressed. However, as the thickness of the battery cell is not uniform for each location, deviations may occur in the pressure that the compression pad applies to the battery cell, and the gas may move to lower pressure areas, causing performance degradation of the battery cell such as lithium plating.

### SUMMARY

### TECHNICAL PROBLEM

The present disclosure is directed to providing a compression pad for applying uniform pressure to a battery cell, and a battery cell stack and a battery module including the same.

### TECHNICAL SOLUTION

A battery cell stack according to an embodiment of the present disclosure may include a plurality of battery cells arranged parallel to each other, each battery cell including an electrode assembly having an electrode tab and an outer packaging accommodating the electrode assembly; and a compression pad interposed between the plurality of battery cells. The compression pad may include a main portion; and a side portion disposed at an end portion of the main portion, and having a lower compression ratio than the main portion, the side portion overlapping an electrode tab-side region of the battery cell with respect to a thickness direction of the compression pad.

The electrode assembly may include an electrode and a separator arranged in an alternating manner. The electrode may include an overlapping area where the electrode tab is connected, and which overlaps the side portion in the thickness direction of the compression pad.

A length of the overlapping area in a length direction of the battery cell may be 5% to 10% of a length of the electrode.

The side portion may include an inner portion connected to the main portion and having a thickness corresponding to the main portion; and an outer portion located at an outside of the inner portion and having a thickness that increases outwards.

The thickness of the inner portion and the thickness of the outer portion may correspond to each other when the compression pad is separated from between the plurality of battery cells.

The main portion may include polyurethane, and the side portion may include silicone.

The side portion may be disposed at two sides with the main portion interposed therebetween, with respect to a length direction of the battery cell.

The main portion may correspond to a central portion and a long edge portion of the battery cell, and the side portion may correspond to a short edge portion of the battery cell.

A battery module according to an embodiment of the present disclosure may include a module housing; and a battery cell stack accommodated in the module housing. The battery cell stack may include a plurality of battery cells arranged parallel to each other, each battery cell including an electrode assembly having an electrode tab and an outer packaging accommodating the electrode assembly; and a compression pad interposed between the plurality of battery cells. The compression pad may include a main portion; and a side portion disposed at an end portion of the main portion, and having a lower compression ratio than the main portion, the side portion overlapping an electrode tab-side region of the battery cell with respect to a thickness direction of the compression pad.

The battery module may further include a busbar frame disposed at an outside of the battery cell stack, the busbar frame on which a busbar is mounted. The battery cell may further include an electrode lead connected to the electrode tab, protruded outward from the outer packaging, and coupled to the busbar. The side portion may face the busbar frame with respect to a length direction of the battery cell.

A compression pad according to an embodiment of the present disclosure may be interposed between a plurality of battery cells arranged parallel to each other, each battery cell including an electrode assembly having an electrode tab and an outer packaging accommodating the electrode assembly. The compression pad may include a main portion; and a side portion disposed at an end portion of the main portion, and having a lower compression ratio than the main portion, the side portion overlapping an electrode tab-side region of the battery cell with respect to a thickness direction of the compression pad.

### ADVANTAGEOUS EFFECTS

According to an exemplary embodiment of the present disclosure, in the event of swelling in the battery cell, to compensate for a thickness difference between the electrode tab-side region and the central region of the battery cell, the side portion of the compression pad may have a lower compression ratio than the main portion. Accordingly, the compression pad may apply uniform pressure to the battery cell, thereby preventing performance degradation of the battery cell caused by lithium plating.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a perspective view of a battery module according to an embodiment of the present disclosure.
FIG. 2 is an exploded perspective view of the battery module shown in FIG. 1.
FIG. 3 is a plan view of a battery cell stack according to an embodiment of the present disclosure.
FIG. 4 is a diagram illustrating the operation of a compression pad according to an embodiment of the present disclosure.
FIG. 5 is a cross-sectional view showing a compression pad according to an embodiment of the present disclosure together with the inner parts of a battery cell.
FIG. 6 is a schematic diagram showing a compression pad and a battery cell according to another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

In the drawings, each element of a secondary battery according to an embodiment of the present disclosure is schematically shown, and the size of the element or the thickness of the line may be somewhat exaggerated for convenience of understanding.

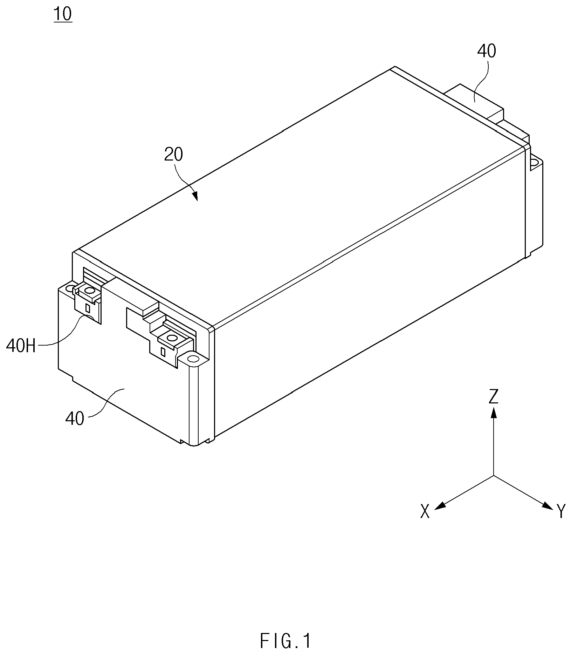

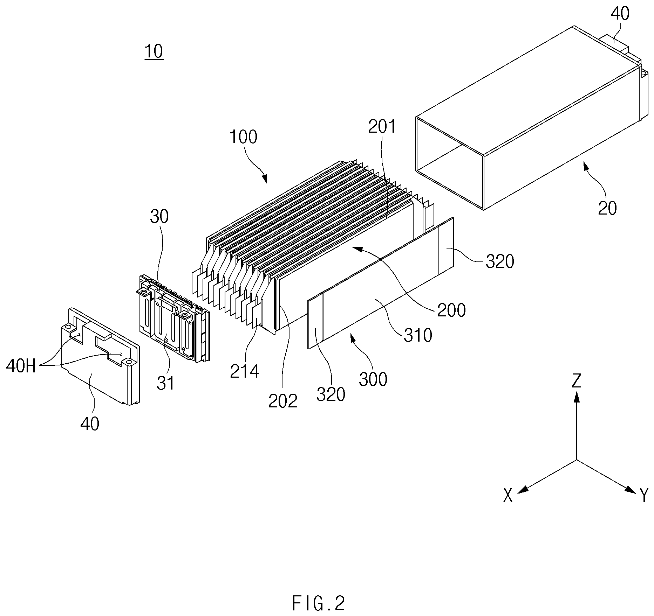

FIG. 1 is a perspective view of a battery module according to an embodiment of the present disclosure, and FIG. 2 is an exploded perspective view of the battery module shown in FIG. 1.

The battery module 10 according to an embodiment of the present disclosure may include a battery cell stack 100 and a module housing 20.

The battery cell stack 100 may be accommodated in the module housing 20. The battery cell stack 100 may include a plurality of battery cells 200 and a compression pad 300 interposed between the plurality of battery cells 200.

The plurality of battery cells 200 may be arranged parallel to each other. The plurality of battery cells 200 may be arranged facing each other in a first direction (for example, a direction parallel to the Y axis). More specifically, the plurality of battery cells 200 may be stacked on each other in the first direction. In addition, each battery cell 200 may be extended in a second direction (for example, a direction parallel to the X axis) perpendicular to the first direction. The first direction may be a direction parallel to a width direction of the module frame 20, a thickness direction of the battery cell 200 or a thickness direction of the compression pad 300. The second direction may be a direction parallel to a length direction of the module frame 20, a length direction of the battery cell 200 or a length direction of the compression pad 300.

The length direction of each battery cell 200 may be parallel to the second direction. The width direction of each battery cell 200 may be parallel to a third direction (for example, a direction parallel to the Z axis) perpendicular to the first direction and the second direction.

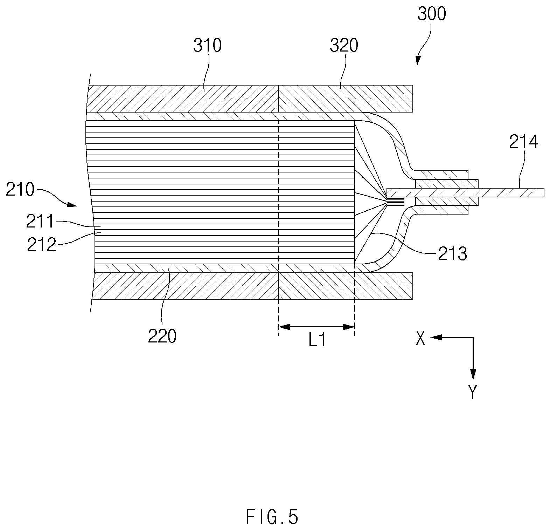

Each battery cell 200 may include an electrode assembly 210 having an electrode tab 213 and an outer packaging 220 accommodating the electrode assembly 210 (see FIG. 5).

The electrode assembly 210 may be formed by placing an electrode 211 and a separator 212 in an alternating manner. That is, the electrode assembly 210 may include a plurality of electrodes 211 and separators 212 interposed between the plurality of electrodes 211 to insulate the plurality of electrodes 211 from each other. The electrode assembly 210 may come in various types such as a stack type, a jellyroll type or a stack-and-folding type, and the type of the electrode assembly 210 is not limited thereto.

Each battery cell 200 may be a pouch-type battery cell. The pouch-type battery cell may allow the maximum number of stacks per unit area, leading to the increased energy density of the battery module 10. For example, the battery cell 200 may be manufactured by receiving the electrode assembly 210 in the outer packaging 220 of a formed laminated sheet and sealing the outer packaging 220 by heat fusion. However, the battery cell 200 is not necessarily limited to the pouch type, and may be provided in a prismatic type, a cylindrical type or any other type at a sufficient level to achieve the storage capacity required for a device on which the battery cells 200 will be mounted afterwards.

Each battery cell 200 may have the electrode tab 213. The electrode tab 213 may connect the electrode 211 of the electrode assembly 210 to an electrode lead 214 as described below. The electrode tab 213 may include a positive tab connected to the positive electrode and a negative tab connected to the negative electrode.

Each battery cell 200 may have the electrode lead 214. The electrode lead 214 may include a positive lead connected to the positive tab, and a negative lead connected to the negative tab. That is, the electrode lead 214 may include a pair of electrode leads protruded in opposite directions, and may be protruded parallel to the length direction of the battery cell 200. However, the present disclosure is not limited thereto, and the pair of electrode leads 214 may be protruded parallel to each other in the same direction.

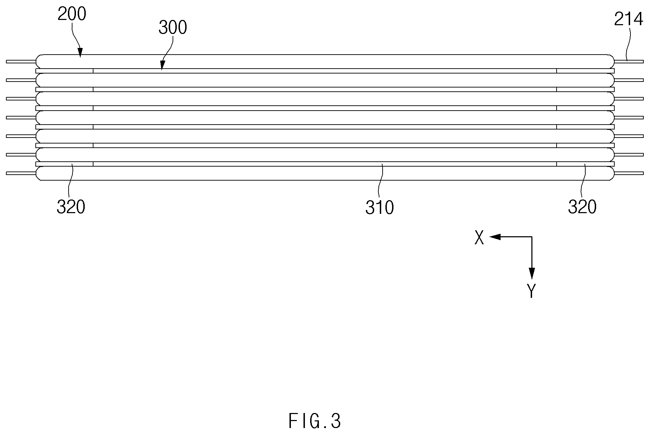

The compression pad 300 may be interposed between the plurality of battery cells 200. The compression pad 300 may include at least one compression pad, and preferably a plurality of compression pads. For example, as shown in FIG. 3, the plurality of battery cells 200 and the plurality of compression pads 300 may be arranged in an alternating manner.

The battery cells 200 may contact two surfaces of each compression pad 300. More specifically, the two surfaces of each compression pad 300 may contact the adjacent battery cells 200.

In the event of swelling in the battery cell 200, the compression pad 300 may be compressed between two battery cells 200. The compression pad 300 may apply pressure to the battery cell 200 to suppress the swelling in the battery cell 200 and mitigate the shock applied to the battery cell 200.

The compression pad 300 may be disposed parallel to the battery cell 200. More specifically, the length direction of each compression pad 300 may be parallel to the second direction. The width direction of each compression pad 200 may be parallel to the third direction.

The detailed configuration of the compression pad 300 will be described in detail below.

Meanwhile, the module frame 20 may form the exterior of the battery module 10. The module frame 20 may include a metal material having high strength.

The structure of the module frame 20 may vary. As an example, the module frame 20 may be a mono frame. The mono frame may be a metal sheet having a top surface, a bottom surface and two sides integrally formed. As another example, the module frame 20 may have a structure in which a U-shaped frame and a top plate (the top surface) are combined. The U-shaped frame may be a metal sheet having a bottom plate (the bottom surface) and a side plate (the two sides) combined or integrally formed. Besides, the structure of the module frame 20 may be provided as a structure in which L-shaped frames are combined, and may be provided as various structures not described in the above-described examples.

The module frame 20 may have an internal space, and the internal space may accommodate the battery cell stack 100. More specifically, the module frame 20 may include the top surface, the bottom surface and two sides. The module frame 20 may have two open end portions in the length direction, and the two open end portions may be covered by an end cap 40 as described below.

The battery module 10 may further include a busbar frame 30 which is disposed at the outside of the battery cell stack 100 and on which a busbar 31 is mounted.

The busbar frame 30 may be disposed at two sides of the battery cell stack 100. At least one busbar 31 may be mounted on the busbar frame 30. The electrode lead 214 of the battery cell 200 may be coupled to the busbar 31.

The battery module 10 may further include the end cap 40.

The end cap 40 may be disposed at the outside of the busbar frame 30. That is, the busbar frame 30 may be disposed between the battery cell stack 100 and the end cap 40.

The end cap 40 may be coupled to the module frame 20. The end cap 40 may cover the two open end portions of the module frame 20. The end cap 40 may have an opening 40H, and an electrical connection of the busbar 31 may be established through the opening 40H. The busbar 31 of one battery module 10 may be electrically connected to another battery module 10, a Battery Disconnect Unit (BDU) or an external load through the opening 40H.

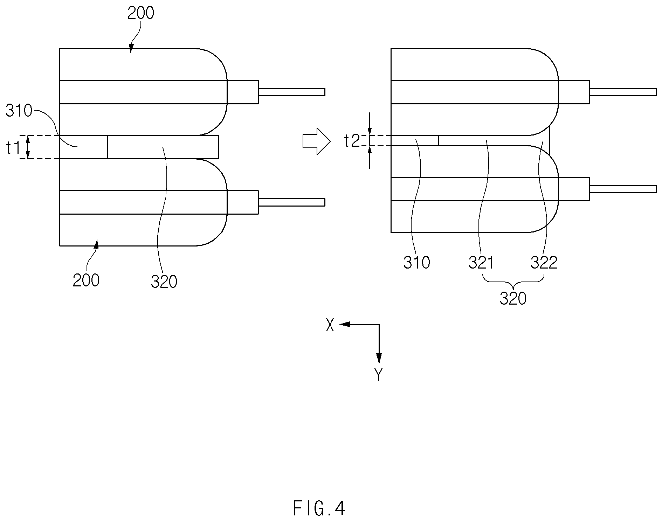

FIG. 3 is a plan view of the battery cell stack according to an embodiment of the present disclosure, FIG. 4 is a diagram illustrating the operation of the compression pad according to an embodiment of the present disclosure, and FIG. 5 is a cross-sectional view showing the compression pad according to an embodiment of the present disclosure together with the inner parts of the battery cell.

Compression pads having the same compression ratio across the entire area have been used. Accordingly, in the event of swelling in a battery cell, deviations occur in the pressure that the compression pad applies to the battery cell. More specifically, pressure applied to an electrode tab-side region of the battery cell is smaller than pressure applied to a central region of the battery cell. Thus, gas in the battery cell may move toward the electrode tab, causing lithium plating and performance degradation of the battery cell.

To solve this problem, the compression pad 300 according to an embodiment of the present disclosure may include a main portion 310 and a side portion 320 having different compression ratios.

The main portion 310 may be extended in the length direction of the compression pad 300, and have a predetermined width.

The side portion 320 may be disposed at the end portion of the main portion 310. The side portion 320 may form the end portion of the compression pad 300.

The side portion 320 may be extended from the main portion 310. The length of the side portion 320 may be shorter than the length of the main portion 310. The width of the side portion 320 and the width of the main portion 310 may correspond to each other. The thicknesses of the side portion 320 and the thickness of the main portion 310 may correspond to each other. Here, corresponding may signify identical or similar.

The side portion 320 may have a lower compression ratio than the main portion 310. That is, the side portion 320 may have higher rigidity than the main portion 310. For example, the main portion 310 may include urethane, in particular, polyurethane, and the side portion 320 may include silicone. However, the materials of the main portion 310 and the side portion 320 are not limited thereto.

The side portion 320 may overlap the electrode tab 213-side region of the battery cell 200 with respect to the thickness direction of the compression pad 300. The electrode tab 213 may connect the electrode 211 of the electrode assembly 210 to the electrode lead 214. That is, the side portion 320 may overlap the electrode lead 214-side region of the battery cell 200 with respect to the thickness direction of the compression pad 300.

In the case of this embodiment, the electrode lead 214 may be protruded in opposite directions from two sides in the length direction of the battery cell 200. That is, the electrode tab 213-side region of the battery cell 200 may refer to a region at or near two end portions of the battery cell 200. Accordingly, the side portion 320 may be disposed at two end portions of the main portion 310. The side portion 320 may be disposed at the two sides with the main portion 310 interposed therebetween, with respect to the length direction of the battery cell 200. The side portion 320 may form two end portions of the compression pad 300. The side portion 320 may face the busbar frame 30 (see FIG. 2) with respect to the length direction of the battery cell 200.

The electrode tab 213-side region of the battery cell 200 may have a smaller thickness than the central region of the battery cell 200. That is, the electrode tab 213-side region of the battery cell 200 and the central region of the battery cell 200 may have a thickness difference. In particular, in the event of swelling in the battery cell 200, the thickness difference may increase. Accordingly, when swelling occurs in the battery cell 200, in the compression pad 300, the main portion 310 may be more compressed as it is subject to pressure by the central region of the battery cell 200, and the side portion 320 may be less compressed as it is subject to pressure by the electrode tab 213-side region of the battery cell 200.

In relation to this, because the side portion 320 has a lower compression ratio, i.e., higher rigidity than the main portion 310, the side portion 320 may generate a strong restoring force when even slightly compressed. Accordingly, the side portion 320 may apply sufficient pressure to the electrode tab 213-side region of the battery cell 200 when even slightly compressed. Accordingly, the compression pad 300 may apply uniform pressure over the entire battery cell 200.

Meanwhile, the side portion 320 may include an inner portion 321 connected to the main portion 310 and having a thickness corresponding to the main portion 310, and an outer portion 322 located at the outside of the inner portion 321 and having a thickness that increases outwards.

More specifically, referring to FIG. 4, before swelling in the battery cell 200, the main portion 310 and the side portion 320 of the compression pad 300 may have an initial thicknesses t1 corresponding to each other. When swelling occurs in the battery cell 200, the main portion 310 has a compressed thickness t2 that is smaller than the initial thickness t1, and the side portion 320 may be divided into the inner portion 321 and the outer portion 322.

The inner portion 321 may have a compressed thickness t2 corresponding to the main portion 310. The outer portion 322 may have a larger thickness than the compressed thickness t2, and the thickness may increase outwards. However, the maximum thickness of the outer portion 322 may be equal to or less than the initial thickness t1.

When the compression pad 300 is separated from between the plurality of battery cells 200, the thickness of the inner portion 321 and the thickness of the outer portion 322 may correspond to each other. That is, the inner portion 321 and the outer portion 322 may be restored to the initial thickness t1.

The main portion 310 may correspond to a central portion and a long edge portion 201 (see FIG. 2) of the battery cell 200, and the side portion 320 may correspond to a short edge portion 202 (see FIG. 2) of the battery cell 200. Here, corresponding may signify contact or close to each other. Accordingly, it may be possible to prevent excessive pressure from being applied to the long edge portion 201 of the battery cell 200, and prevent lithium plating at the long side portion.

Meanwhile, referring to FIG. 5, the electrode 211 of the electrode assembly 210 of the battery cell 200, in particular, the positive electrode, may include an overlapping area that overlaps the side portion 320 in the thickness direction of the compression pad 300. The electrode tab 213 may be connected to the overlapping area.

A length L1 of the overlapping area in the length direction of the battery cell 200 may be 5% to 10% of the length of the electrode 211. That is, the end region corresponding to 5% to 10% of the length of the electrode 211 may overlap the side portion 320. Accordingly, the battery cell 200 may be subject to uniform pressure by the compression pad 300.

When the length L1 of the overlapping area is less than 5% of the length of the electrode 211, sufficient pressure may not be applied to the electrode tab 213-side region of the battery cell 200. When the length L1 of the overlapping area is more than 10% of the length of the electrode 211, excessive pressure may be applied to the central region of the battery cell 200. That is, when the length L1 of the overlapping area is outside of the range between 5% and 10% of the length of the electrode 211, uniform pressure may not be applied to the battery cell 200.

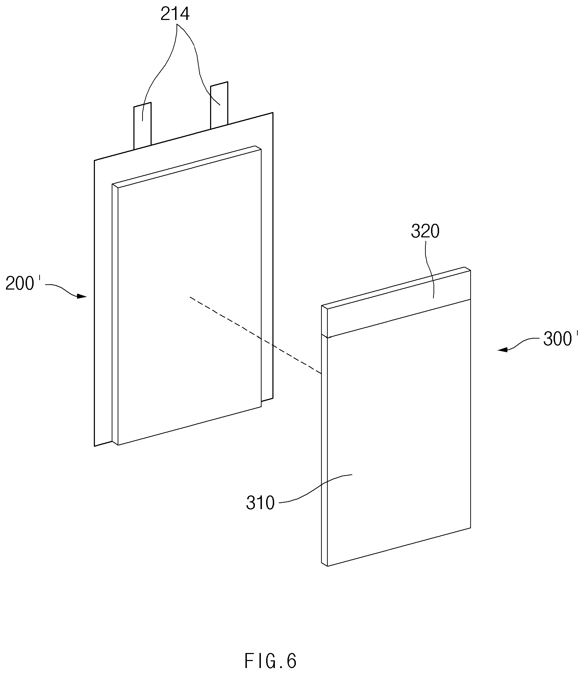

FIG. 6 is a schematic diagram showing the compression pad and the battery cell according to another embodiment of the present disclosure.

In the case of this embodiment, the electrode leads 214 may be protruded parallel to each other in the same direction from one side in the length direction of the battery cell 200'. That is, the electrode tab 213-side region of the battery cell 200' may refer to a region at or near one end portion of the battery cell 200'. Accordingly, the side portion 320 may be disposed at one end portion of the main portion 310. That is, the side portion 320 may form one end portion of the compression pad 300', and the other end portion of the compression pad 300' may be a part of the main portion 310.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and are not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [List of Reference Numerals]

| | | | |
|---|---|---|---|
| 10: | Battery module | 20: | Module frame |
| 30: | Busbar Frame | 40: | End cap |
| 100: | Battery cell stack | 200: | Battery cell |
| 210: | Electrode assembly | 211: | Electrode |
| 212: | Separator | 213: | Electrode tab |
| 214: | Electrode lead | 220: | Outer packaging |
| 300: | Compression pad | 310: | Main portion |
| 320: | Side portion | 321: | Inner portion |
| 322: | Outer portion | | |

## Claims

1. A battery cell stack comprising:
a plurality of battery cells arranged parallel to each other, each battery cell including an electrode assembly having an electrode tab and an outer packaging accommodating the electrode assembly; and
a compression pad interposed between the plurality of battery cells,
wherein the compression pad includes:
a main portion; and
a side portion disposed at an end portion of the main portion, and having a lower compression ratio than the main portion, the side portion overlapping an electrode tab-side region of the battery cell with respect to a thickness direction of the compression pad.

2. The battery cell stack according to claim 1,
wherein the electrode assembly includes an electrode and a separator arranged in an alternating manner, and
wherein the electrode includes:
an overlapping area where the electrode tab is connected, and which overlaps the side portion in the thickness direction of the compression pad.

3. The battery cell stack according to claim 2,
wherein a length of the overlapping area in a length direction of the battery cell is 5% to 10% of a length of the electrode.

4. The battery cell stack according to claim 1,
wherein the side portion includes:
an inner portion connected to the main portion and having a thickness corresponding to the main portion; and
an outer portion located at an outside of the inner portion and having a thickness that increases outwards.

5. The battery cell stack according to claim 4,
wherein the thickness of the inner portion and the thickness of the outer portion correspond to each other when the compression pad is separated from between the plurality of battery cells.

6. The battery cell stack according to claim 1,
wherein the main portion includes polyurethane, and
wherein the side portion includes silicone.

7. The battery cell stack according to claim 1,
wherein the side portion is disposed at two sides with the main portion interposed therebetween, with respect to a length direction of the battery cell.

8. The battery cell stack according to claim 1,
wherein the main portion corresponds to a central portion and a long edge portion of the battery cell, and
wherein the side portion corresponds to a short edge portion of the battery cell.

9. A battery module comprising:
a module housing; and
a battery cell stack accommodated in the module housing,
wherein the battery cell stack includes:
a plurality of battery cells arranged parallel to each other, each battery cell including an electrode assembly having an electrode tab and an outer packaging accommodating the electrode assembly; and
a compression pad interposed between the plurality of battery cells, and
wherein the compression pad includes:
a main portion; and
a side portion disposed at an end portion of the main portion, and having a lower compression ratio than the main portion, the side portion overlapping an electrode tab-side region of the battery cell with respect to a thickness direction of the compression pad.

10. The battery module according to claim 9, further comprising:
a busbar frame disposed at an outside of the battery cell stack, the busbar frame on which a busbar is mounted,
wherein the battery cell further includes:
an electrode lead connected to the electrode tab, protruded outward from the outer packaging, and coupled to the busbar, and
wherein the side portion faces the busbar frame with respect to a length direction of the battery cell.

11. A compression pad interposed between a plurality of battery cells arranged parallel to each other, each battery cell including an electrode assembly having an electrode tab and an outer packaging accommodating the electrode assembly, the compression pad comprising:
a main portion; and
a side portion disposed at an end portion of the main portion, and having a lower compression ratio than the main portion, the side portion overlapping an electrode tab-side region of the battery cell with respect to a thickness direction of the compression pad.
